# EUROPÄISCHE PATENTSCHRIFT

(11) **EP 0 500 109 B1**
(45) Veröffentlichungstag und Bekanntmachung des Hinweises auf die Patenterteilung: **16.10.1996**
(21) Anmeldenummer: 92102865.0
(22) Anmeldetag: 20.02.1992
(51) Int. Cl.: B01D 29/11, B01D 29/84, B01D 29/88, B01D 29/90

(54) **Verfahren zum Betrieb einer Filtrationsanlage und Filtrationsanlage zur Durchführung dieses Verfahrens**
Process for operating a filtration plant and filtration plant for carrying out this process
Procédé de fonctionnement d'une installation de filtration et installation de filtration pour la mise en oeuvre

(30) Priorität: 22.02.1991 DE 4105659
(43) Veröffentlichungstag der Anmeldung: 26.08.1992
(73) Patentinhaber: BHS-Bayerische Berg-, Hütten- und Salzwerke Aktiengesellschaft, D-80335 München (DE)
(72) Erfinder: Tichy, Josef W., Dipl.-Ing., W-8972 Sonthofen (DE)
(74) Vertreter: Weickmann, Heinrich, Dipl.-Ing.

(56) Entgegenhaltungen:
- EP-A- 0 025 628
- EP-A- 0 280 063
- DE-A- 3 918 267
- US-A- 1 951 017
- US-A- 3 794 164

## Beschreibung

Die Erfindung betrifft ein Verfahren zum Betrieb einer Filtrationsanlage, diese Filtrationsanlage umfassend einen Flüssigkeitsbehälter und mindestens ein in dem Flüssigkeitsbehälter angeordnetes Filterelement mit einer mit vertikaler Komponente verlaufenden, flüssigkeitsaufgabeseitigen Filteroberfläche und einer flüssigkeitsabzugseitigen Filteroberfläche, wobei durch eine Gasdruckdifferenz zwischen der flüssigkeitsaufgabeseitigen Filteroberfläche und der flüssigkeitsabzugseitigen Filteroberfläche ein Flüssigkeitsdurchgang durch das Filterelement bewirkt wird und wobei zur Filtration bei nur teilweise oder gar nicht in die Flüssigkeit eintauchendem Filterelement Flüssigkeit im Fallstrom über den über den Flüssigkeitsspiegel nach oben überstehenden Teil der flüssigkeitsaufgabeseitigen Filteroberfläche von dessen oberem Ende her nach unten geleitet wird.

Aus der EP-OS 280 063 ist ein Verfahren bekannt, bei dem zur Abführung von restlicher Suspensionsflüssigkeit im Fall einer Betriebsunterbrechung die restliche Suspensionsflüssigkeit aus dem Bodenteil des Suspensionsbehälters abgesaugt und durch eine Sprühdüse oberhalb des Filterelements wieder eingeführt und dabei versprüht wird. Die versprühten Tröpfchen sollen sich dabei auf der Aufgabeseite des Filterelementes niederschlagen und durch Überdruck in dem Suspensionsbehälter durch das Filterelement hindurchgedrückt werden. Zusätzlich ist vorgesehen, daß ein Teil der versprühten Suspension des Restvolumens von einem an dem Filterelement vorgesehenen Verteiler aufgefangen und durch eine ringförmige Öffnung zwischen dem Verteiler und dem Filterelement auf den Filterkuchen geleitet wird. Es wird dafür gesorgt, daß sich Flüssigkeit und Feststoff in der Regel bereits im oberen Drittel des Filterelementes trennen und somit kein nochmaliges Restvolumen im Bodenteil des Suspensionsbehälters entstehen kann.

Dies bedeutet, daß die Aufgabeseite des Filterelements während des Betriebs allenfalls im oberen Drittel ihrer Höhe von Flüssigkeit bedeckt ist. Dies bedeutet weiter, daß Druckgas in großer Menge durch das Filterelement hindurchgehen kann, dort nämlich wo die Flüssigkeitsaufgabeseite des Filterelements nicht durch Flüssigkeit bedeckt ist. Dies hat nicht nur zur Folge, daß eine große Menge Druckgases unnötig verbraucht wird und das Verfahren deshalb in der Energiebilanz ungünstig ist. Ein weiterer Nachteil liegt vielmehr darin, daß das das Filterelement in großer Menge durchsetzende Druckgas mit Flüssigkeit gesättigt wird, so daß an der Flüssigkeitsabzugsseite eine Gasreinigung erfolgen muß, insbesondere dann, wenn das Gas mit gefährlichen Stoffen angereichert ist.

Ein weiterer Nachteil des bekannten Verfahrens ist es, daß bei erfolgender Trennung von Flüssigkeit und Feststoffen im oberen Drittel der Filterkuchen aus der Restflüssigkeit sich allein im oberen Drittel ansammelt, so daß über die Gesamthöhe des Filterelements gesehen eine ungleichmäßige Filterkuchendicke sich bildet, die nicht nur bei der Abnahme des Filterkuchens, sondern insbesondere auch bei Trocknung und/oder Waschung des Filterkuchens von Nachteil sein kann.

Aus der DE-OS 39 18 267 ist es bekannt, längs einer für die Restvolumenfiltration reservierten Filterkerze einen Flüssigkeitsschleier durch einen Spalt fließen zu lassen, welcher zwischen der Außenumfangsfläche dieser Filterkerze und einem die Filterkerze im oberen Endbereich umgebenden Kragenblech gebildet ist. Es ist dabei nicht zu erkennen, ob und in welchem Umfang dieser Flüssigkeitsschleier zur Filmbildung auf der Außenumfangsfläche der Filterkerze führen kann, insbesondere weil die angegebenen alternativen Möglichkeiten der Druckgasführung negativen Einfluß auf eine Filmbildung haben dürften.

Der Erfindung liegt die Aufgabe zugrunde, ein Filtrationsverfahren anzugeben, bei dem der Verbrauch von Druckgas wesentlich reduziert ist und das Problem der Reinigung von Druckgas mengenmäßig wesentlich reduziert ist.

Zur Lösung dieser Aufgabe wird erfindungsgemäß vorgeschlagen, daß die Flüssigkeit in solcher Menge und Verteilung einem oberen Randbereich der flüssigkeitsaufgabeseitigen Filteroberfläche zugeführt wird, daß sich auf der gesamten Hohe bzw. auf der gesamten über den Flüssigkeitsspiegel überstehenden Höhe des Filterelements ein die flüssigkeitsaufgabeseitige Filteroberfläche im wesentlichen vollständig bedeckender, gasdurchbruchhemmender Flüssigkeitsfilm bildet.

Der im Betrieb ständig aufrechterhaltene, geschlossene Flüssigkeitsfilm verhindert einen Gasdurchbruch mit den oben beschriebenen nachteiligen Folgen. Ferner ist dafür gesorgt, daß sich auf der gesamten Aufgabeseite des Filterelements ein im wesentlichen gleichmäßiger und insbesondere gleich starker Filterkuchen aufbaut.

Das erfindungsgemäße Verfahren kann zur Restentleerung von Suspensionsflüssigkeit aus dem Flüssigkeitsbehälter angewandt werden, nachdem im Hinblick auf eine eingetretene oder bevorstehende Betriebsunterbrechung der Spiegel der Suspensionsflüssigkeit nach unterhalb des oberen Endes des Filterelements abgesunken ist. Dabei kann die restliche Suspensionsflüssigkeit laufend aus dem Bodenteil des Suspensionsbehälters abgezogen werden, so daß der Rest an Suspensionsflüssigkeit im Bodenteil des Suspensionsbehälters immer geringer wird. Dabei kann es notwendig sein, die Gasfüllung in dem Suspensionsbehälter allmählich zu steigern, um den Druckabfall des Gasdrucks infolge abnehmender Flüssigkeitsfüllung zu kompensieren. Es ist aber auch denkbar, daß man den natürlichen Druckabbau des Gasdrucks in Kauf nimmt, um damit gegen Ende der Restentleerung Gasdurchbrüche zu minimieren, die eintreten könnten, wenn die Geschlossenheit des Flüssigkeitsfilms schließlich nicht mehr besteht.

Das erfindungsgemäße Verfahren kann weiter angewandt werden, wenn zur Vorbereitung eines stationären Betriebs mit vollständig gefülltem Suspensionsbehälter dieser allmählich gefüllt wird. Dies bedeutet, daß die Filtration schon zu einem Zeitpunkt beginnen kann, zu dem der Suspensionsbehälter noch nicht vollständig gefüllt ist. Die notwendige Gesamtfiltrationszeit für eine vorgegebene Gesamtmenge an Suspensionsflüssigkeit wird dadurch verringert. Während des Anstiegs des Suspensionsspiegels in dem Suspensionsbehälter mag es notwendig sein, im Falle einer Gasfüllung über dem Suspensionsspiegel diese allmählich abzublasen, um den Überdruck auf der Flüssigkeitsaufgabeseite innerhalb gewünschter Grenzen zu halten.

Das erfindungsgemäße Verfahren mag auch im Dauerfilm-Betrieb benutzt werden, d.h. also, daß man überhaupt nicht anstrebt, den Suspensionsbehälter vollständig mit Suspensionsflüssigkeit zu füllen, sondern ständig im Filmbetrieb filtert. Diese Anwendungsmöglichkeit ist insbesondere dann von Interesse, wenn man relativ kleine Suspensionschargen in relativ großen Filtrationsanlagen zu behandeln beabsichtigt. Bei diesem Verfahren kann man gleichwohl im Boden des Suspensionsbehälters eine AnSammlung von Suspensionsflüssigkeit zulassen und aus dieser laufend Suspensionsflüssigkeit abziehen und dem oberen Ende des Filterelements zum Zwecke der laufenden Filmbildung zuführen. Es ist aber auch denkbar, statt oder gleichzeitig mit dem Abzug aus einem Bodenstand die Suspensionsflüssigkeit unmittelbar von einem äußeren Vorratsbehälter her zuzuführen.

Weiter läßt sich das erfindungsgemäße Verfahren anwenden, wenn es darum geht, Stoffe aus einem Filterkuchen auszuwaschen, der sich auf der Flüssigkeitsaufgabeseite des Filterelements gebildet hat. Dies kann mit einer verhältnismäßig geringen Menge von Waschflüssigkeit geschehen, was im Hinblick auf spätere Trenn- oder Konzentrationsvorgänge von Vorteil ist.

Schließlich kann das erfindungsgemäße Verfahren auch zur Bildung eines Voranschwemmkuchens auf der Flüssigkeitsaufgabeseite des Filterelements benutzt werden. Man nennt einen solchen Voranschwemmkuchen auch "precoat". Die Bildung eines solchen Voranschwemmkuchens ist beispielsweise dann erwünscht, wenn man aus einer Suspension einen klebrigen Filterkuchen zu erwarten hat und wenn man das Filtermittel, also z. B. ein Filtertuch, nicht durch den klebrigen Filterkuchen beschädigen oder unbrauchbar machen will. Weiterhin ist die Bildung eines Voranschwemmkuchens u. U. notwendig, wenn man ein verhältnismäßig grobes Filtermittel, z. B. Filtertuch, im Einsatz hat und aus der Suspension sehr feine Feststoffteilchen zu erwarten hat, die von dem Filtermittel nicht oder nicht vollständig zurückgehalten würden. Dabei ist es wiederum vorteilhaft, daß man den Voranschwemmkuchen mit einer geringen Flüssigkeitsmenge aufbauen kann und dies in einer kurzen Bildungszeit.

Die Erfindung betrifft weiter eine Filtrationsanlage umfassend einen Suspensionsbehälter, mindestens ein in diesem Suspensionsbehälter angeordnetes Filterelement mit einer flüssigkeitsaufgabeseitigen, mit vertikaler Komponente verlaufenden Filteroberflache und einer flüssigkeitsabzugseitigen Filteroberfläche, wobei durch eine Gasdruckdifferenz zwischen der flüssigkeitsaufgabeseitigen Filteroberfläche und der flüssigkeitsabzugseitigen Filteroberfläche ein Flüssigkeitsdurchgang durch das Filterelement bewirkbar ist, und ferner umfassend eine Flüssigkeitszuführeinrichtung zum oberen Ende des Filterelements und eine Flüssigkeitsverteilereinrichtung am oberen Ende des Filterelements, wobei die Flüssigkeitszuführeinrichtung für direkte Flüssigkeitsabgabe der gesamten umgepumpten Flüssigkeit an das obere Ende des Filterelements ausgebildet ist und wobei die Flüssigkeitszufüreinrichtung und die Verteilereinrichtung derart bemessen und ausgebildet sind, daß sie unter Betriebsbedingungen einen die flüssigkeitsaufgabeseitige Filteroberflache des Filterelements auf dessen gesamter Höhe bzw. auf dessen Teilhöhe über einem etwaigen Flüssigkeitsspiegel in dem Suspensionsbehälter im wesentlichen vollständig bedeckenden, gasdurchbruchhemmenden Flüssigkeitsfilm ergeben.

Um einen geschlossenen Flüssigkeitsfilm zu gewinnen, ist es vorteilhaft, wenn die Flüssigkeitsaufgabeseite des Filterelements im wesentlichen vertikal verläuft.

Es sind aber auch Abweichungen von der Vertikalen Einstellung der Flüssigkeitsaufgabeseite denkbar. Insbesondere ist es möglich, daß die Flüssigkeitsaufgabeseite gegen die Vertikale in der Weise geneigt ist, daß der Flüssigkeitsfilm über einen geneigten Hang abläuft. Bei entsprechenden Flüssigkeiten ist sogar ein Ablauf über einen Überhang nicht auszuschließen.

Eine gleichmäßige Verteilung des Films über die Oberfläche der Aufgabeseite läßt sich dann erreichen, wenn die Verteilereinrichtung ein gewelltes oder gezacktes Überlaufwehr umfaßt, welches die flüssigkeitsaufgabeseitige Filteroberfläche des Filterelements im wesentlichen bündig fortsetzt.

Das Filterelement kann insbesondere von einer Filterkerze mit einer die aufgabeseitige Filteroberfläche bildenden, im wesentlichen zylindrischen Außenoberfläche und einem inneren Ableitungskanalsystem gebildet sein, wobei die Flüssigkeitszuführeinrichtung eine Flüssigkeitszuflußstelle oberhalb der Filterkerze und innerhalb einer gedachten Verlängerung ihrer zylindrischen Außenoberfläche aufweist. Es sind aber auch sogenannte Blattfilterelemente anwendbar, d.h. Filterelemente mit einer im wesentlichen ebenen Flüssigkeitsaufgabeseite.

Im Falle einer Filterkerze wird man die Verteilereinrichtung bevorzugt in Form einer ringförmigen Verteilerkrone ausbilden, welche die Flüssigkeitszuflußstelle umschließt.

Der Suspensionsbehälter wird insbesondere im Hinblick auf die Restentleerung mit einem Abzug in seinem Bodenteil auszurüsten sein, welcher über eine Pumpe mit der Flüssigkeitszuführung verbunden ist. Den Abzug wird man dabei möglichst tief legen, damit eine möglichst vollständige Flüssigkeitsentleerung stattfinden kann.

Für den Flüssigkeitszufluß zu dem Suspensionsbehälter ist an sich kein bestimmter Ort vorgeschrieben. Um einen turbulenzfreien Anstieg der Flüssigkeit in dem Suspensionsbehälter zu gewährleisten, ist es allerdings vorteilhaft, wenn der Flüssigkeitszufluß in den Bodenteil des Suspensionsbehälters mündet.

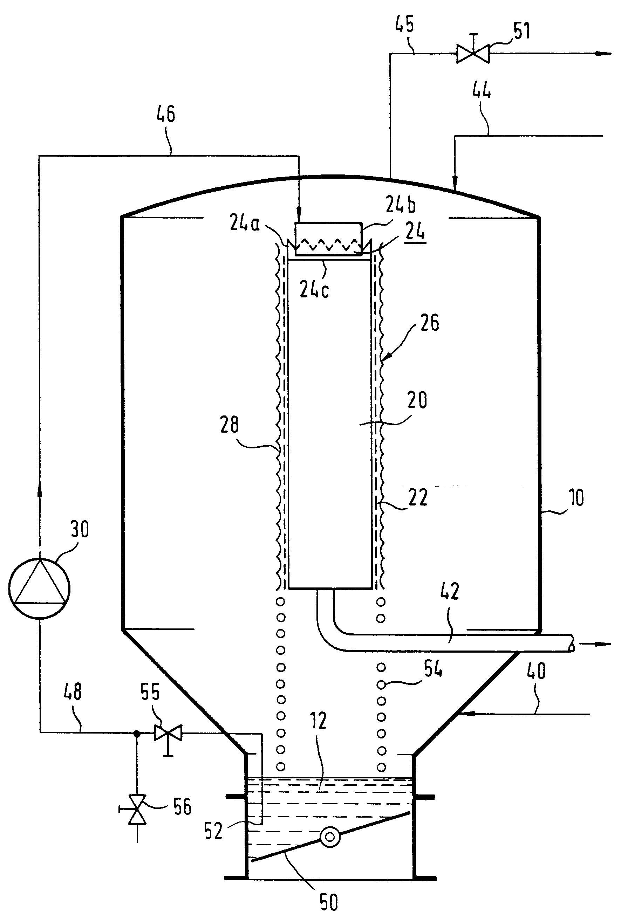

Wenn man die Druckdifferenz zwischen Flüssigkeitsaufgabeseite und Flüssigkeitsabzugsseite durch Innendruck in dem Suspensionsbehälter erzielen will, so wird man den Suspensionsbehälter mit einem Preßgasanschluß versehen. Diesen Preßgasanschluß wird man bevorzugt im oberen Teil des Suspensionsbehälters oberhalb der Verteilereinrichtung anbringen, wiederum mit dem Ziele, Turbulenzen in dem Suspensionsbehälter zu vermeiden. Gegebenenfalls kann im oberen Teil auch ein Preßgasabfluß vorgesehen sein, um steigenden Preßgasdruck bei steigendem Flüssigkeitsspiegel in dem Suspensionsbehälter abbauen zu können.
Will man die Druckdifferenz zwischen Flüssigkeitsaufgabeseite und Flüssigkeitsabzugsseite durch Unterdruck auf der Flüssigkeitsabzugsseite aufbauen, so kann man die flüssigkeitsabzugseitige Filteroberfläche an einem Unterdruckraum angrenzen lassen, der mit einer Absaugvorrichtung verbunden ist.
Die beiliegende Figur erläutert die Erfindung anhand eines Ausführungsbeispiels.

Die Figur zeigt eine Filtrationsanlage mit einem Flüssigkeitsbehälter 10. Zentral innerhalb des Flüssigkeitsbehälters 10 ist ein Filterelement in Form einer Filterkerze 20 angeordnet. Mehrere solche Filterkerzen 20 können innerhalb des Flüssigkeitsbehälters 10 untergebracht sein. Die Filterkerze 20 ist mit einem Filtermittel 22, beispielsweise einem Filtertuch, bedeckt.

In den Bodenteil des Flüssigkeitsbehälters 10 mündet eine Suspensionszuführung 40. Ein Bodenabfluß des Flüssigkeitsbehälters 10 ist durch eine Klappe 50 verschlossen.

Ein mögliche Betriebsweise ist wie folgt: Es wird zu filtrierende Suspension durch die Flüssigkeitszuführung 40 in den Flüssigkeitsbehälter eingefüllt und unter Druck gesetzt. Der Druckaufbau kann dabei von der Flüssigkeitszuführungsleitung 40 her erfolgen. Etwa eingeschlossenes Gas innerhalb des Flüssigkeitsbehälters 10 kann durch eine Rücklaufleitung 45 abgelassen werden, in welcher ein Abschlußventil 51 vorgesehen ist. Nach vollständiger Füllung des Flüssigkeitsbehälters 10 wird das Abschlußventil 51 geschlossen. Infolge des in dem Flüssigkeitsbehälter 10 aufgebauten Drucks wird die Flüssigkeit durch das Filterelement 20 hindurchgedrückt und in Kanälen innerhalb der Filterkerze gesammelt. Diese Flüssigkeit nennt man das Filtrat. Sie kann durch eine Filtratableitung 42 abfließen. Dabei sammeln sich Feststoffteilchen, die in der Suspension enthalten sind, in Form eines Filterkuchens 26 an der Oberfläche des Filtermittels 22. Nach Beendigung des Filtrationsprozesses kann der Filterkuchen unter Öffnen der Klappe 50 entnommen werden.

Wenn der Filtrationsprozeß zu Ende geht, etwa weil der Vorrat an Suspensionsflüssigkeit erschöpft ist, so sinkt der Flüssigkeitsspiegel innerhalb des Flüssigkeitsbehälters 10 ab. Bevor der absinkende Flüssigkeitsspiegel unterhalb des oberen Endes der Filterkerze 20 abgesunken ist, wird ein Umwälzkreislauf 48,30,46 in Betrieb gesetzt. Dieser Umwälzkreislauf umfaßt eine Abzugsleitung 48, die an der tiefsten Stelle des Flüssigkeitsbehälters 10, nämlich an der Stelle 52, offen endet. Diese Abzugsleitung 48 führt zu einer Umwälzpumpe 30, und von der Umwälzpumpe 30 führt eine Wiedereinführungsleitung 46 zu einer Stelle oberhalb der Filterkerze 20. Am oberen Ende der Filterkerze 20 ist eine Verteilereinrichtung 24 angeordnet, die von einer Zackenkrone 24a und einem Staurohr 24b gebildet ist. Das Staurohr 24b endet in kurzem Abstand oberhalb des Bodens 24c der Zackenkrone 24a, so daß ein schmaler Spalt zwischen dem Unterrand des Staurohrs 24b und dem Boden 24c der Zackenkrone 24a besteht. Die zurückgeleitete Suspensionsflüssigkeit tritt in das obere Ende des Staurohrs 24b ein und gelangt durch den Spalt an die Wand der Zackenkrone 24a heran, so daß die Flüssigkeit durch die Täler der Zackenkrone 24a austritt. Die Zackenkrone 24a ist mit Ihrer Außenumfangsfläche annähernd bündig mit der Außenoberfläche der Filterkerze 20. Die durch die Täler der Zackenkrone austretende Flüssigkeit läuft über die Oberfläche des Filtermittels 22 bzw. über die Oberfläche des auf dem Filtermittel 22 gebildeten Filterkuchens in Form eines geschlossenen Films ab. Die Täler der Zackenkrone 24a sind in Umfangsrichtung so eng beabstandet, daß sich bereits am unteren Ende der Zackenkrone 24a ein ringsum geschlossener Flüssigkeitsfilm bildet. Dieser Flüssigkeitsfilm erstreckt sich von der Zackenkrone 24a abwärts über die gesamte Höhe der Filterkerze 20, soweit als diese aus dem jeweiligen Flüssigkeitsspiegel innerhalb des Flüssigkeitsbehälters 10 herausragt, und mündet dann in den Flüssigkeitsspiegel. Wenn der Flüssigkeitsspiegel nach unterhalb des unteren Endes der Filterkerze 20 abgesackt ist, so erstreckt sich der geschlossene Flüssigkeitsfilm 28 bis zum unteren Ende der Filterkerze 20 und fällt dann in Form eines Tröpfchenschleiers 54 nach unten in die Restflüssigkeit. Innerhalb des Flüssigkeitsbehälters 10 wird ein Preßgasvolumen oberhalb des Flüssigkeitsspiegels aufrechterhalten. Das Preßgas wirkt auf den Flüssigkeitsfilm ein und drückt laufend Teile der Flüssigkeit des Flüssigkeitsfilms durch das Filtermittel 22 hindurch. Der Flüssigkeitsdurchgang durch das Filtermittel 22 auf dem Weg des Films 28 zum unteren Ende der Filterkerze 20 ist jedoch in bezug auf die Filmstärke des Flüssigkeitsfilms 28 so bemessen, daß auch am unteren Ende der Filterkerze 20 noch ein geschlossener Flüssigkeitsfilm vorliegt. Während des Absinkens des Flüssigkeitsspiegels wird laufend Preßgas durch die Leitung 44 in den Flüssigkeitsbehälter 10 eingeleitet, so daß zwischen dem Flüssigkeitsfilm einerseits und den inneren Kanälen der Filterkerze 20 andererseits eine annähernd konstante Druckdifferenz aufrechterhalten wird. Durch das Abfließen von Flüssigkeit von dem Film 28 in das Innere der Filterkerze 20 wird weiterhin der Filterkuchen auf der Oberfläche des Filtermittels 22 aufgebaut. Da die Abzugsleitung 48 im Tiefstbereich des Flüssigkeitsbehälters 10 endet, kann auf diese Weise praktisch die gesamte Restflüssigkeit aus dem Suspensionsbehälter filtriert werden. Dabei können keine Druckgaseinbrüche durch das Filtermittel 22 stattfinden, da der Flüssigkeitsfilm ständig erhalten bleibt. Wenn die Flüssigkeit im Boden des Flüssigkeitsbehälters 10 zu Ende geht, so kann ein in der Abzugsleitung 48 gelegenes Absperrventil 55 abgesperrt werden und durch ein Gaseinlaßventil 56 Druckgas in die Abzugsleitung 48 eingelassen werden, so daß Flüssigkeitsreste aus der Abzugsleitung 48 der Pumpe 30 und der Wiedereinführungsleitung 46 auch noch ausgetrieben und als Flüssigkeitsfilm 28 von der Filterkerze 20 filtriert werden können. Wenn schließlich die Filtration vollständig beendet ist, so kann eine Waschflüssigkeit in den Suspensionsbehälter 10 eingeführt werden, beispielsweise durch die Suspensionszuführungsleitung 40, die mit einem entsprechenden Mehr-Wege-Ventil (nicht eingezeichnet) versehen sein kann. Dann kann wiederum durch die Leitung 48, die Pumpe 30 und die Leitung 46 die Waschflüssigkeit laufend umgewälzt werden und sich auf der Oberfläche des Filtermittels 22 ein Waschflüssigkeitsfilm bilden. Auch die Waschflüssigkeit wird dann nach und nach durch das Filtermittel 22 unter der Wirkung des in dem Suspensionsbehälters 10 herrschenden Gasdrucks durch das Filtermittel hindurchgedrückt und wäscht etwa noch in dem Filterkuchen und/oder in dem Filtermittel enthaltene Wertstoffe aus, die dann durch die Leitung 42 abfließen können und gegebenenfalls getrennt behandelt werden können.

Eine Trocknung des Filterkuchens 26 ist schließlich durch Einführen von gegebenenfalls aufgewärmtem Preßgas etwa durch die Leitung 44 möglich.

Nach Trocknen des Filterkuchens - gegebenenfalls auch ohne vorheriges Trocknen - kann der Filterkuchen 26 durch die geöffnete Bodenklappe entnommen werden.

Es ist auch möglich, schon bei Beginn der Füllung des Flüssigkeitsbehälters 10 mit dem Filtrationsprozeß zu beginnen. Wenn sich im Bodenteil beispielsweise ein Flüssigkeitsspiegel bei 12 gebildet hat, so kann die Pumpe 30 in Betrieb gesetzt werden, so daß Flüssigkeit über die Leitung 48, die Pumpe 30 und die Leitung 46 zur Verteilereinrichtung 24 gelangt und als Flüssigkeitsfilm 28 über der Filterkerze 20 herabfließt. Wenn dann gleichzeitig Preßgas durch die Leitung 44 angelegt wird, so setzt der Filtrationsvorgang ein. Mit steigendem Flüssigkeitsspiegel in dem Flüssigkeitsbehälter 10 kann ein Teil des Preßgases durch die Leitung 45 abgeblasen werden, so daß wiederum eine konstante Druckdifferenz zwischen der Außenseite des Flüssigkeitsfilms 28 und den inneren Kanälen der Filterkerze 20 erhalten bleibt, während der Flüssigkeitsspiegel weiter ansteigt. Wenn der Flüssigkeitsspiegel die obere Begrenzung des Flüssigkeitsbehälters 10 erreicht, so kann mit gefülltem Flüssigkeitsbehälter weiter filtriert werden,wobei dann der Druck wahlweise durch die Zuleitung 40 oder die Preßgaszuleitung 44 aufrechterhalten werden kann. Auch während des Anstiegs des Flüssigkeitsspiegels wird der Flüssigkeitsfilm 28 so bemessen, daß er jeweils bis zur Einmündung in den jeweiligen Flüssigkeitsspiegel geschlossen bleibt und keine Gasdurchbrüche stattfinden können.

Es ist ohne weiteres ersichtlich, daß man beispielsweise im Falle kleiner Chargen von zu filtrierenden Suspensionen auf den Aufbau eines die Filterkerze 20 umschließenden Flüssigkeitsstands in dem Flüssigkeitsbehälter 10 vollständig verzichten und immer nur im Filmbetrieb arbeiten kann, so wie vorstehend für den Restentleerungsbetrieb und den Füllbetrieb beschrieben. Dabei kann ein niedriger Flüssigkeitspegel etwa entsprechend dem Flüssigkeitspegel 12 in der Figur ständig aufrechterhalten werden. Die Suspension kann in geringer Menge durch die Leitung 40 zugeführt werden, wobei die Zuführungsmenge selbst etwa der Pumpenleistung der Pumpe 30 entspricht. Die Pumpenleistung der Pumpe 30 ist dabei wieder so einzustellen, daß ständig ein vollständig geschlossener Flüssigkeitsfilm 28 auf der ganzen Höhe der Filterkerze 20 aufrechterhalten wird.

Verschiedene Suspensionen ergeben klebrige Filterkuchen 26 auf der Oberfläche des Filtermittels 22. Will man verhindern, daß solche klebrige Filterkuchen in unmittelbarem Kontakt mit dem Filtermittel 22 treten, so kann man mit Hilfe des erfindungsgemäßen Verfahrens auch einen Voranschwemmkuchen auf der Oberfläche des Filtermittels 22 bilden, und zwar wiederum im Filmbetrieb. Hierzu wird das in einer Hilfsflüssigkeit suspendierte Voranschwemmgut durch die Leitung 40 eingeleitet und im Filmbetrieb auf die Filterkerze 20 gegeben. Wenn sich der Voranschwemmkuchen (precoat) in hinreichender Dicke auf dem Filtermittel 22 ausgebildet hat, kann die zu filtrierende Suspension in den Flüssigkeitsbehälter 10 eingeleitet werden und nach den vorstehend beschriebenen Verfahren filtriert werden.

Ein besonderer Vorteil des erfindungsgemäßen Verfahrens und der erfindungsgemäßen Einrichtung liegt darin, daß vom Start der Suspensionszufuhr bis zum Verarbeiten des letzten Suspensionsrestes die gesamte Filterfläche mit dem maximal möglichen Differenzdruck zur Verfügung steht, so daß der gesamte Filtrationszyklus im theoretisch erforderlichen Zeitminimum abgewickelt werden kann.

Die Restentleerung nach dem Filmprinzip durch Umwälzen in den Leitungen 48 und 46 wird vorzugsweise gestartet, bevor der Flüssigkeitsspiegel in dem Flüssigkeitsbehälter 10 unter das obere Ende der Filterkerze 20 abgesunken ist.

Anstelle oder neben dem Druckaufbau durch Preßgas der Leitung 44 kann auch ein Unterdruck innerhalb der Filterkerze 20 aufgebaut werden, insbesondere über die Leitung 42.

Die Waschung des Filterkuchens kann bei fast leerem Filterbehälter erfolgen, d. h. mit geringen Waschmittelmengen.

Die Verteilereinrichtung 24 ist vorzugsweise selbstentleerend ausgebildet, damit auch in der Verteilereinrichtung kein Flüssigkeitsrest stehen bleibt. Zu diesem Zweck können die Zackentäler bis zum Boden 24 der Zackenkrone heruntergezogen sein. Die Verteilereinrichtung kann auch noch mit Einbauten versehen sein, die bei unterschiedlicher hydraulischer Belastung eine gleichmäßige Flüssigkeitsverteilung gewährleisten.

## Patentansprüche

1. Verfahren zum Betrieb einer Filtrationsanlage, diese Filtrationsanlage umfassend einen Flüssigkeitsbehälter (10) und mindestens ein in dem Flüssigkeitsbehälter angeordnetes Filterelement (20) mit einer mit vertikaler Komponente verlaufenden, flüssigkeitsaufgabeseitigen Filteroberfläche und einer flüssigkeitsabzugseitigen Filteroberfläche, wobei durch eine Gasdruckdifferenz zwischen der flüssigkeitsaufgabeseitigen Filteroberfläche und der flüssigkeitsabzugseitigen Filteroberfläche ein Flüssigkeitsdurchgang durch das Filterelement (20) bewirkt wird und
wobei zur Filtration bei nur teilweise oder gar nicht in die Flüssigkeit eintauchendem Filterelement (20) Flüssigkeit im Fallstrom (28) über den über den Flüssigkeitsspiegel nach oben überstehenden Teil der flüssigkeitsaufgabenseitigen Filteroberfläche von dessen oberem Ende her nach unten geleitet wird,
dadurch gekennzeichnet,
daß die Flüssigkeit in solcher Menge und Verteilung einem oberen Randbereich der flüssigkeitsaufgabeseitigen Filteroberfläche zugeführt wird, daß sich auf der gesamten Höhe bzw. auf der gesamten
über den Flüssigkeitsspiegel überstehenden Höhe des Filterelements (20) ein die flüssigkeitsaufgabeseitige Filteroberfläche im wesentlichen vollständig bedeckender, gasdurchbruchhemmender Flüssigkeitsfilm (28) bildet.

2. Verfahren nach Anspruch 1,
dadurch gekennzeichnet,
daß es zur Restentleerung von Suspensionsflüssigkeit aus dem Flüssigkeitsbehälter (10) benutzt wird, nachdem im Hinblick auf eine Betriebsunterbrechung der Spiegel (12) der Suspensionsflüssigkeit nach unterhalb des oberen Endes (24) des Filterelements (20) abgesunken ist, wobei die restliche Suspensionsflüssigkeit laufend aus dem Bodenteil des Suspensionsbehälters (10) abgezogen wird.

3. Verfahren nach Anspruch 1,
dadurch gekennzeichnet, daß es während der Füllung des Suspensionsbehälters (10) mit einer Suspensionsflüssigkeit angewandt wird, bevor der Suspensionsspiegel (12) das obere Ende (24) des Filterelements (20) erreicht hat.

4. Verfahren nach Anspruch 1,
dadurch gekennzeichnet,
daß es im Dauerfilmbetrieb benutzt wird, wobei die Suspensionsflüssigkeit von einem äußeren Vorrat und/oder einem Bodenstand (12) in dem Suspensionsbehälter (10) dem oberen Randbereich der flüssigkeitsaufgabeseitigen Filteroberfläche zugeführt wird.

5. Verfahren nach Anspruch 1,
dadurch gekennzeichnet,
daß es zum Auswaschen von Stoffen aus einem Filterkochen (26) benutzt wird, der sich auf der Flüssigkeitsaufgabeseite des Filterelements (20) gebildet hat.

6. Verfahren nach Anspruch 1,
dadurch gekennzeichnet,
daß es zur Bildung eines Voranschwemmkuchens auf der Flüssigkeitsaufgabeseite des Filterelements (20) benutzt wird.

7. Filtrationsanlage umfassend einen Suspensionsbehälter (10), mindestens ein in diesem Suspensionsbehälter (10) angeordnetes Filterelement (20) mit einer flüssigkeitaufgabenseitigen, mit vertikaler Komponente verlaufenden Filteroberfläche und einer flüssigkeitsabzugseitigen Filteroberfläche, wobei durch eine Gasdruckdifferenz zwischen der flüssigkeitsaufgabeseitigen Filteroberfläche und der flüssigkeitsabzugseitigen Filteroberfläche ein Flüssigkeitsdurchgang durch das Filterelement (20) bewirkbar ist,
und ferner umfassend eine Flüssigkeitszuführeinrichtung (46) zum oberen Ende (24) des Filterelements (20) und eine Flüssigkeitsverteilereinrichtung (24) am oberen Ende des Filterelements (20),
wobei die Flüssigkeitszuführeinrichtung (46) für direkte Flüssigkeitsabgabe der gesamten umgepumpten Flüssigkeit an das obere Ende des Filterelements ausgebildet ist und
wobei die Flüssigkeitszuführeinrichtung (46) und die Verteilereinrichtung (24) derart bemessen und ausgebildet sind, daß sie unter Betriebsbedingungen einen die flüssigkeitsaufgabeseitige Filteroberfläche des Filterelements (20) auf dessen gesamter Höhe bzw. auf dessen Teilhöhe über einem etwaigen Flüssigkeitsspiegel in dem Suspensionsbehälter (10) im wesentlichen vollständig bedeckenden, gasdurchbruchhemmenden Flüssigkeitsfilm (28) ergeben.

8. Fltrationsanlage nach Anspruch 7,
dadurch gekennzeichnet,
daß die flüssigkeitsaufgabeseitige Filteroberfläche des Filterelements (20) im wesentlichen vertikal verläuft.

9. Filtrationsanlage nach Anspruch 7 oder 8,
dadurch gekennzeichnet,
daß die Verteilereinrichtung (24) ein gewelltes oder gezacktes Überlaufwehr (24a) umfaßt, welches die flüssigkeitsaufgabeseitige Filteroberfläche des Filterelements (20) im wesentlichen bündig fortsetzt.

10. Filtrationsanlage nach einem der Ansprüche 7 - 9,
dadurch gekennzeichnet,
daß das Filterelement (20) von einer Filterkerze (20) mit einer die aufgabeseitige Filteroberfläche bildenden, im wesentlichen zylindrischen Außenoberfläche und einem inneren Ableitungskanalsystem gebildet ist, wobei die Flüssigkeitszuführeinrichtung (46) eine Flüssigkeitszuflußstelle oberhalb der Filterkerze (20) und innerhalb einer gedachten Verlängerung ihrer zylindrischen Außenoberfläche aufweist.

11. Filtrationsanlage nach Anspruch 10,
dadurch gekennzeichnet,
daß die Verteilereinrichtung (24) eine ringförmige Verteilerkrone (24a) aufweist, welche die Flüssigkeitszuflußstelle umschließt.

12. Filtrationsanlage nach einem der Ansprüche 7 - 11,
dadurch gekennzeichnet,
daß der Suspensionsbehälter (10) mit einem Abzug (48,52) in seinem Bodenteil ausgerüstet ist, welcher über eine Pumpe (30) mit der Flüssigkeitszuführung (46) verbunden ist.

13. Filtrationsanlage nach einem der Ansprüche 7 - 12,
dadurch gekennzeichnet,
daß der Suspensionsbehälter (10) in seinem Bodenteil mit einem Flüssigkeitszufluß (40) verbunden ist.

14. Filtrationsanlage nach einem der Ansprüche 7 - 13,
dadurch gekennzeichnet,
daß der Suspensionsbehälter (10) mit einem Preßgasanschluß (44) verbunden ist.

15. Filtrationsanlage nach einem der Ansprüche 7 - 14,
dadurch gekennzeichnet,
daß die flüssigkeitsabzugseitige Filteroberfläche an einen Unterdruckraum angrenzt, der mit einer Absaugvorrichtung (42) verbunden ist.

## Claims

1. Method of operating a filtration plant, this filtration plant comprising a liquid vessel (10) and at least one filter element (20) which is disposed in the liquid vessel and has a filter surface on the liquid feed side which extends with a vertical component and a filter surface on the liquid discharge side, wherein a gas pressure difference between the filter surface on the liquid feed side and the filter surface on the liquid discharge side causes liquid to pass through the filter element (20), and wherein, in order to filter with a filter element (20) which is only partly, or not at all, immersed in the liquid, liquid is directed downwards in a descending flow (28) over the part of the filter surface on the liquid feed side which projects upwards above the surface of the liquid from the top to the bottom end of this part, characterised in that the liquid is supplied to a top edge region of the filter surface on the liquid feed side in a quantity and distribution such that a liquid film (28) which essentially completely covers the filter surface on the liquid feed side and impedes the break-through of gas forms over the entire height of the filter element (20) or over the entire height thereof which projects above the surface of the liquid.

2. Method according to claim 1, characterised in that it is used to empty residual suspension liquid from the liquid vessel (10) after the surface (12) of the suspension liquid has dropped below the top end (24) of the filter element (20) with regard to interrupting the operation, the residual suspension liquid being constantly drawn off from the bottom part of the suspension vessel (10).

3. Method according to claim 1, characterised in that it is employed while filling the suspension vessel (10) with a suspension liquid before the surface (12) of the suspension reaches the top end (24) of the filter element (20).

4. Method according to claim 1, characterised in that it is used in continuous film operation, the suspension liquid being supplied to the top edge region of the filter surface on the liquid feed side from an external reservoir and/or a bottom level (12) in the suspension vessel (10).

5. Method according to claim 1, characterised in that it is used to wash substances out of a filter cake (26) which has formed on the liquid feed side of the filter element (20).

6. Method according to claim 1, characterised in that it is used to form a pre-purification cake (precoat) on the liquid feed side of the filter element (20).

7. Filtration plant comprising a suspension vessel (10), at least one filter element (20) which is disposed in this suspension vessel (10) and has a filter surface on the liquid feed side which extends with a vertical component and a filter surface on the liquid discharge side, wherein a gas pressure difference between the filter surface on the liquid feed side and the filter surface on the liquid discharge side can cause liquid to pass through the filter element (20), and also comprising a liquid supply device (46) for the top end (24) of the filter element (20) and a liquid distributor device (24) at the top end of the filter element (20), wherein the liquid supply device (46) is formed to deliver all the liquid which is circulated by pumping directly to the top end of the filter element, and wherein the liquid supply device (46) and the distributor device (24) are dimensioned and formed such that under operating conditions they produce a liquid film (28) which essentially completely covers the filter surface of the filter element (20) on the liquid feed side over its entire height or over the part of its height above any liquid surface in the suspension vessel (10) and impedes the break-through of gas.

8. Filtration plant according to claim 7, characterised in that the filter surface of the filter element (20) on the liquid feed side extends essentially vertically.

9. Filtration plant according to claim 7 or 8, characterised in that the distributor device (24) comprises a corrugated or serrated overflow weir (24a) which continues the filter surface of the filter element (20) on the liquid feed side in an essentially flush manner.

10. Filtration plant according to one of claims 7 - 9, characterised in that the filter element (20) is formed by a filter candle (20) with an essentially cylindrical external surface, which forms the filter surface on the feed side, and an internal drainage system, wherein the liquid supply device (46) has a liquid inflow point above the filter candle (20) and within an imaginary extension of its cylindrical external surface.

11. Filtration plant according to claim 10, characterised in that the distributor device (24) comprises an annular distributor crown (24a) which surrounds the liquid inflow point.

12. Filtration plant according to one of claims 7 - 11, characterised in that the suspension vessel (10) is provided in its bottom part with a liquid discharge system (48, 52) which is connected via a pump (30) to the liquid supply device (46).

13. Filtration plant according to one of claims 7 - 12, characterised in that the suspension vessel (10) is connected in its bottom part to a liquid inflow device (40).

14. Filtration plant according to one of claims 7 - 13, characterised in that the suspension vessel (10) is connected to a compressed-gas connection (44).

15. Filtration plant according to one of claims 7 - 14, characterised in that the filter surface on the liquid discharge side adjoins a space which is at a pressure below atmospheric and is connected to a suction device (42).

## Revendications

1. Procédé d'exploitation d'une installation de filtration, cette installation de filtration comportant un réservoir de liquide (10) et au moins un filtre (20), placé dans le réservoir de liquide avec une surface de filtre côté chargement du liquide, à composante verticale et une surface de filtre côté évacuation du liquide, un passage de liquide étant provoqué à travers le filtre (20), par une différence de pression de gaz entre la surface de filtre côté chargement du liquide et la surface de filtre côté évacuation du liquide et
dans lequel pour la filtration, dans le cas où le filtre (20) ne pénètre que partiellement ou pas du tout dans le liquide, du liquide est dirigé vers le bas dans le courant de chute (28), sur la partie, dépassant vers le haut du niveau du liquide, de la surface de filtre côté chargement du liquide à partir de son extrémité supérieure, caractérisé
en ce que le liquide est envoyé à une zone de bordure supérieure de la face de filtre côté chargement du liquide, dans une quantité et une distribution telles que sur toute la hauteur ou sur toute la hauteur dépassant du niveau du liquide du filtre (20), il se forme une pellicule de liquide (28) empêchant l'arrivée de gaz, recouvrant sensiblement la totalité de la surface de filtre côté chargement du liquide.

2. Procédé selon la revendication 1,
caractérisé
en ce qu'il est utilisé pour la vidange résiduelle de liquide de suspension dans le réservoir de liquide (10), après que, en vue d'une interruption du fonctionnement, le niveau (12) du liquide de suspension a été abaissé au-dessous de l'extrémité supérieure (24) du filtre (20), le liquide de suspension restant étant soutiré en permanence de la partie de fond du réservoir de suspension (10).

3. Procédé selon la revendication 1,
caractérisé
en ce qu'il est appliqué pendant le remplissage du réservoir de suspension (10) avec un liquide de suspension, avant que le niveau de suspension (12) ait atteint l'extrémité supérieure (24) du filtre (20).

4. Procédé selon la revendication 1,
caractérisé
en ce qu'il est utilisé en fonctionnement continu en pellicule, le liquide de suspension étant envoyé d'un réservoir extérieur et/ou d'un niveau de fond (12) dans le réservoir de suspension (10), à la zone de bordure supérieure de la surface de filtre côté chargement du liquide.

5. Procédé selon la revendication 1,
caractérisé
en ce qu'il est utilisé pour le lavage de substances d'un gâteau de filtre (26), qui s'est formé sur le côté chargement du liquide du filtre (20).

6. Procédé selon la revendication 1,
caractérisé
en ce qu'il est utilisé pour la formation d'un gâteau de précouche sur le côté de chargement de liquide du filtre (20).

7. Installation de filtration comportant un réservoir de suspension (10), au moins un filtre (20) placé dans ce réservoir de suspension (10) avec une surface de filtre côté chargement du liquide, à composante verticale et une surface de filtre côté évacuation du liquide, un passage du liquide à travers le filtre (20), pouvant être provoqué par une différence de pression de gaz entre la surface de filtre côté chargement du liquide et la surface de filtre côté évacuation du liquide,
et comportant en outre un dispositif d'alimentation en liquide (46) vers l'extrémité supérieure (24) du filtre (20) et un dispositif de distribution de liquide (24) à l'extrémité supérieure du filtre (20),
le dispositif d'alimentation de liquide (46) étant conformé pour la distribution directe de tout le liquide pompé à l'extrémité supérieure du filtre et
le dispositif d'alimentation de liquide (46) et le dispositif de distribution (24) ayant des dimensions et étant conçus de manière à donner, dans des conditions de fonctionnement, une pellicule de liquide (28) empêchant l'arrivée de gaz, recouvrant sensiblement la totalité de la surface de filtre côté chargement du liquide du filtre (20), sur toute sa hauteur ou sur sa hauteur partielle au-dessus d'un éventuel niveau de liquide dans le réservoir de suspension (10).

8. Installation de filtration selon la revendication 7,
caractérisée
en ce que la surface de filtre côté chargement du liquide du filtre (20) s'étend sensiblement verticalement.

9. Installation de filtration selon la revendication 7 ou 8,
caractérisée
en ce que le dispositif de distribution (24) comporte un déversoir de trop-plein (24a) ondulé ou denté, qui prolonge sensiblement à fleur de la surface de filtre côté chargement du liquide du filtre (20).

10. Installation de filtration selon l'une des revendications 7 à 9,
caractérisée
en ce que le filtre (20) est formé par un filtre en forme de bougie (20) avec une surface extérieure sensiblement cylindrique, formant la surface de filtre côté chargement et un système de canal de déviation intérieur, le dispositif d'alimentation de liquide (46) présentant un point d'arrivée de liquide au-dessus du filtre en forme de bougie et à l'intérieur d'un prolongement imaginaire de sa surface extérieure cylindrique.

11. Installation de filtration selon la revendication 10,
caractérisée
en ce que le dispositif de distribution (24) présente une couronne de distributeur (24a) annulaire, qui entoure le point d'arrivée de liquide.

12. Installation de filtration selon l'une des revendications 7 à 11,
caractérisée
en ce que le réservoir de suspension (10) est équipé d'une évacuation (48, 52) dans sa partie de fond, qui est reliée par une pompe (30) à l'alimentation de liquide (46).

13. Installation de filtration selon l'une des revendications 7 à 12,
caractérisée
en ce que le réservoir de suspension (10) est relié, dans sa partie de fond, avec une arrivée de liquide (40).

14. Installation de filtration selon l'une des revendications 7 à 13,
caractérisée
en ce que le réservoir de suspension (10) est relié à un raccord de gaz de pression (44).

15. Installation de filtration selon l'une des revendications 7 à 14,
caractérisée
en ce que la surface de filtre coté évacuation du liquide est adjacente à une chambre de dépression, qui est reliée à un dispositif d'aspiration (42).
